# EUROPÄISCHE PATENTANMELDUNG

(11) **EP 1 375 228 A1**
(43) Veröffentlichungstag der Anmeldung: **02.01.2004**
(21) Anmeldenummer: 03012845.8
(22) Anmeldetag: 06.06.2003
(51) Int. Cl.: B60K 15/04

(54) **Vorrichtung zum Ausgleichen des Drucks in einem Kraftfahrzeugtank**

(30) Priorität: 21.06.2002 DE 10227698
(71) Anmelder: Rasmussen GmbH, 63477 Maintal (DE)
(72) Erfinder: Eberle, Markus, 63546 Hammersbach (DE); Warm, Thomas, 64807 Dieburg (DE)
(74) Vertreter: Knoblauch, Andreas, Dr.-Ing.

(57) **Zusammenfassung**

Eine Vorrichtung zum Ausgleichen des Drucks in einem Kraftfahrzeugtank weist einen im wesentlichen aus Kunststoff bestehenden Druckausgleichbehälter (1) und eine im wesentlichen aus Kunststoff bestehende Fluidleitung (2) auf, über die der Druckausgleichbehälter (1) mit dem Tank verbindbar ist. Statt der bisher üblichen Kupplung zwischen Druckausgleichbehälter (1) und Fluidleitung (2) sind der Druckausgleichbehälter (1) und die Fluidleitung (2) erfindungsgemäß einstückig und nahtlos als separates Bauteil hergestellt. Dadurch entfällt die Herstellung der Kupplung zwischen Druckausgleichbehälter und Fluidleitung, ein dementsprechend separates Kuppeln der beiden Teile sowie das Hindurchdiffundieren des Kraftstoffs durch die Kupplung. Da Druckausgleichbehälter und Fluidleitung ein separates Bauteil bilden, kann der Druckausgleichbehälter unabhängig vom Ort der Verlegung des üblicherweise einstükkig mit dem Druckausgleichbehälter ausgebildeten Tankeinfüllrohrs raumsparend den Platzverhältnissen entsprechend im Kraftfahrzeug eingebaut werden.

## Beschreibung

Die Erfindung bezieht sich auf eine Vorrichtung zum Ausgleichen des Drucks in einem Kraftfahrzeugtank, mit einem im wesentlichen aus Kunststoff bestehenden Druckausgleichbehälter und einer im wesentlichen aus Kunststoff bestehenden Fluidleitung, über die der Druckausgleichbehälter mit dem Tank verbindbar ist.

Bei einer bekannten Vorrichtung dieser Art ist der Druckausgleichbehälter gemeinsam mit dem Tankeinfüllrohr als starres Blasformteil ausgebildet. Dabei sind der Druckausgleichbehälter und das Tankeinfüllrohr durch eine Schweißnaht verbunden, die zugleich eine Unterteilung des Bauteils in Druckausgleichbehälter und Tankeinfüllrohr bewirkt. Das eine Ende der Fluidleitung ist mit einem Anschlußstutzen des Druckausgleichbehälters und das andere Ende der Fluidleitung mit einem Anschlußstutzen am Tank verbunden. Die Fluidleitung dient der Verbindung zwischen Tank und Druckausgleichbehälter, wenn der Druckausgleichbehälter aus Platzgründen vom Tank entfernt untergebracht werden muß. Die Verbindung zwischen Fluidleitung und Druckausgleichbehälter ist eine Steckverbindung, die ebenso wie die Naht zwischen Tankeinfüllrohr und Druckausgleichbehälter gegenüber Fluiden, wie Benzin, Dieselöl und dergleichen Kraftstoffe nicht hinreichend permeationsdicht gegen ein Hindurchdiffundieren ist. Die gemeinsame Ausbildung von Druckausgleichbehälter und Tankeinfüllrohr als starres Bauteil erschwert dessen raumsparenden Einbau im Kraftfahrzeug.

Der Erfindung liegt die Aufgabe zugrunde, eine Vorrichtung der eingangs genannten Art anzugeben, die permeationsärmer, einfacher und raumsparender einzubauen und einfacher herstellbar ist.

Erfindungsgemäß ist diese Aufgabe dadurch gelöst, daß der Druckausgleichbehalter und die Fluidleitung einstückig und nahtlos als separates Bauteil hergestellt sind.

Bei dieser Lösung entfällt eine Kupplung zwischen Fluidleitung und Druckausgleichbehälter und dementsprechend ein separates Kuppeln der beiden Teile und das Hindurchdiffundieren des Kraftstoffs an einer solchen Verbindungsstelle. Da Druckausgleichbehälter und Fluidleitung ein separates Bauteil bilden, können sie unabhängig vom Ort der Verlegung des Tankeinfüllrohrs raumsparend, den Platzverhältnissen entsprechend, eingebaut werden.

Wenn der Druckausgleichbehälter darüber hinaus flexibel ist, kann er nicht nur den gegebenen Platzverhältnissen beim Einbau leichter angepaßt werden, sondern auch dem Gasdruck im Tank nachgeben. Der Druckausgleichbehälter ist besonders flexibel, wenn er als Wellrohr ausgebildet ist.

Ferner können der Druckausgleichbehälter und die Fluidleitung gemeinsam in einem Korrugator als Wellrohr ausgebildet sein.

Alternativ kann auch ein Saugblasverfahren zur Herstellung des Bauteils aus Druckausgleichbehälter und Fluidleitung angewandt werden. Dadurch lassen sich Wellungen auf der Innen- und Außenseite des Bauteils ausbilden.

Wenn der Druckausgleichbehälter und die Fluidleitung mehrschichtig ausgebildet sind, können die Materialien der einzelnen Schichten so gewählt werden, daß sie wenigstens den wichtigsten an das Bauteil gestellten Anforderungen, insbesondere der gewünschten Diffusionssperrfähigkeit, genügen.

Die Erfindung und ihre Weiterbildungen werden nachstehend anhand der beiliegenden Zeichnungen bevorzugter Ausführungsbeispiele näher beschrieben. Darin stellen dar:
- Fig. 1: eine perspektivische Ansicht einer erfindungsgemäßen Vorrichtung,
- Fig. 2: eine Ansicht des einen Endes des Drucksausgleichbehälters der erfindungsgemäßen Vorrichtung im Schnitt mit einem darin eingesetzten Kupplungsteil,
- Fig. 3: den Ausschnitt A der Fig. 1 bei einer abgewandelten Ausführungsform der erfindungsgemäßen Vorrichtung und
- Fig. 4: ein zweites Ausführungsbeispiel einer erfindungsgemäßen Vorrichtung.

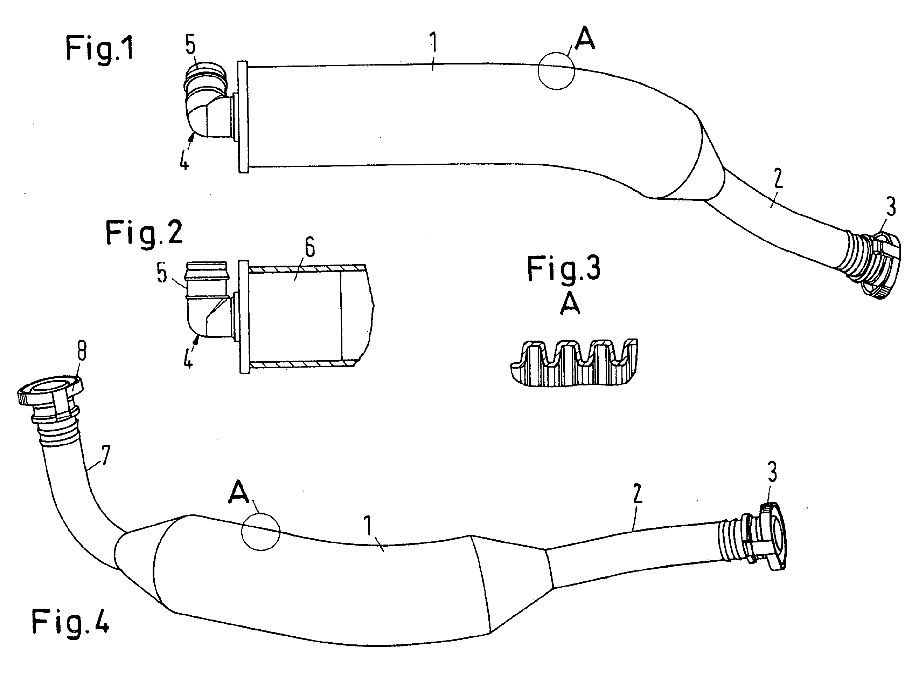

Nach den Fig. 1 und 2 besteht eine erfindungsgemäße Vorrichtung zum Ausgleichen des Drucks in einem Kraftfahrzeugtank aus einem Druckausgleichbehälter 1 und einer Fluidleitung 2, die einstückig und nahtlos als separates Bauteil hergestellt sind.

Der Druckausgleichbehälter 1 besteht aus flexiblem Kunststoff. Auch die Fluidleitung 2 besteht aus flexiblem Kunststoff. Die Wände des Druckausgleichbehälters 1 und der Fluidleitung 2 sind glatt, können alternativ aber auch gewellt ausgebildet sein, wie es der in Fig. 3 dargestellte Ausschnitt A zeigt.

Im Vergleich zu einer herkömmlichen Vorrichtung aus Druckausgleichbehälter und Fluidleitung entfällt eine Kupplung zwischen Druckausgleichbehälter und die damit verbundene Diffusion von Kraftstoffdämpfen durch die Verbindungsstelle der Kupplung, die üblicherweise als Steckkupplung mit 0-Ringen als Dichtungsringe zwischen den beiden Kupplungsteilen ausgebildet ist.

Am freien Ende der Fluidleitung 2 ist ein Kupplungsteil 3 befestigt. Das Kupplungsteil 3 hat ein geripptes Rohrstück, das in die Fluidleitung 2 fest eingepreßt ist. Der nicht dargestellte Tank des Kraftfahrzeugs hat einen Anschlußstutzen, der in das Kupplungsteil 3 paßt, so daß sich eine Steckkupplung ergibt, die lösbar ist.

Am freien Ende des Druckausgleichbehälters 1 ist ebenfalls ein Kupplungsteil 4 befestigt, das ein geripptes Rohrstück 5 für den Anschluß eines Kupplungsteils eines Aktivkohlefilters und ein zylindrisches Rohrstück 6 zur Aufnahme eines Rückschlagventils aufweist, das im Falle eines Überschlags des Kraftfahrzeugs schließt.

Die einstückige Vorrichtung aus Druckausgleichbehälter 1 und Fluidleitung 2 kann durch Blasformen, aber auch im Spritzgußverfahren hergestellt werden. Eine Vorrichtung in Form eines Wellrohres, von dem der Ausschnitt A in Fig. 3 dargestellt ist, kann in einem Korrugator hergestellt werden. Ein Wellrohr ist besonders flexibel und läßt sich leicht entsprechend den räumlichen Gegebenheiten im Kraftfahrzeug raumsparend einbauen.

Das Ausführungsbeispiel nach Fig. 4 unterscheidet sich von dem nach den Fig. 1 und 2 nur dadurch, daß anstelle des Kupplungsteils 4 eine zweite Fluidleitung 7 einstückig mit dem Druckausgleichbehälter 1 ausgebildet und das freie Ende der Fluidleitung 7 mit einem Kupplungsteil 8 versehen ist, das ebenso wie das Kupplungsteil 3 ausgebildet ist, wenn der Aktivkohlefilter mit einem dazu passenden Kupplungsteil, wie dem Kupplungsteil 4 nach den Fig. 1 und 2, versehen ist. Das Kupplungsteil 8 kann ebenfalls ein Rückschlagventil zum selbsttätigen Absperren des Tanks bei sich überschlagendem Kraftfahrzeug aufweisen.

Auch bei der Vorrichtung nach Fig. 4 können der Druckausgleichbehälter 1 und die Fluidleitungen 2 und 7 auf die gleiche Weise wie die Vorrichtung nach Fig. 1 glattwandig oder als Wellrohr mit Wellungen gemäß Fig. 3 ausgebildet sein. Die Herstellung kann ebenfalls durch Saugblasformen bzw. in einem Korrugator erfolgen.

Eine weitere Abwandlung kann darin bestehen, daß der Druckausgleichbehälter 1, die Fluidleitung 2 und die Fluidleitung 7 mehrschichtig ausgebildet sind. Dadurch können die Materialien der einzelnen Schichten so gewählt werden, daß sie wenigstens den wichtigsten an das Bauteil gestellten Anforderungen, insbesondere der gewünschten Diffusionssperrfähigkeit, genügen.

## Patentansprüche

1. Vorrichtung zum Ausgleichen des Drucks in einem Kraftfahrzeugtank, mit einem im wesentlichen aus Kunststoff bestehenden Druckausgleichbehälter (1) und einer im wesentlichen aus Kunststoff bestehenden Fluidleitung (2), über die der Druckausgleichbehälter (1) mit dem Tank verbindbar ist, **dadurch gekennzeichnet, daß** der Druckausgleichbehälter (1) und die Fluidleitung (2) einstückig und nahtlos als separates Bauteil hergestellt sind.

2. Vorrichtung nach Anspruch 1, **dadurch gekennzeichnet, daß** der Druckausgleichbehälter (1) flexibel ist.

3. Vorrichtung nach Anspruch 1 oder 2, **dadurch gekennzeichnet, daß** der Druckausgleichbehälter (1) als Wellrohr ausgebildet ist.

4. Vorrichtung nach einem der Ansprüche 1 bis 3, **dadurch gekennzeichnet, daß** der Druckausgleichbehälter (1) und die Fluidleitung (2) gemeinsam in einem Korrugator als Wellrohr ausgebildet sind.

5. Vorrichtung nach einem der Ansprüche 1 bis 3, **dadurch gekennzeichnet, daß** der Druckausgleichbehälter (1) und die Fluidleitung (2) gemeinsam durch ein Saugblasverfahren hergestellt sind.

6. Vorrichtung nach einem der Ansprüche 1 bis 3, **dadurch gekennzeichnet, daß** der Druckausgleichbehälter (1) und die Fluidleitung (2) mehrschichtig ausgebildet sind.
